# EUROPEAN PATENT APPLICATION

(11) **EP 3 865 633 A1**
(43) Date of publication of application: **18.08.2021**
(21) Application number: 19870756.4
(22) Date of filing: 30.09.2019
(51) Int. Cl.: E04B 1/344, B64G 1/22

(54) **EXPANDABLE STRUCTURE**

(30) Priority: 09.10.2018 JP 2018190879
(71) Applicant: Outsense, Inc, Tokyo 144-0044 (JP)
(72) Inventor: SOGAME, Akito, Hiratsuka-city, Kanagawa 2591292 (JP); ISHIMATSU, Shintaro, Tokyo 144-0044 (JP)
(74) Representative: Loyer & Abello
(86) International application number: PCT/JP2019/038469
(87) International publication number: WO 2020/075551

(57) **Abstract**

An objective of the present invention is to provide a deployable structure which enables an element even with high rigidity to be folded. A deployable structure (1A) includes a pair of belt-shaped elements (3A, 3A) and a connecting element (4A), wherein the connecting element (4A) connects the pair of belt-shaped elements (3A, 3A) so as to be freely deformable between a folded state and a deployed state, with corners (307) of the pair of belt-shaped elements (3A, 3A) being in contact with each other on their front faces (301) on one side in a thickness direction of the pair of belt-shaped elements (3A, 3A), wherein the pair of belt-shaped elements (3A, 3A) extends in parallel to a predetermined plane xy in the folded state and perpendicular to the predetermined plane xy in the deployed state. Ends of the front faces (301) of the belt-shaped elements (3A, 3A) are connected to the connecting element (4B) via first bent portions (5) which are bendable along the ends. Lateral faces (303, 304) of the pair of belt-shaped elements (3A, 3A) have second cutouts (308) which avoid an interference of the pair of belt-shaped elements (3A, 3A) in the deployed state.

## Description

### BACKGROUND OF THE INVENTION

### Technical Field

The present invention relates to a deployable structure.

### Background Art

Conventionally, deployable structures are known which are deformable between a folded state with a reduced outer shape and a deployed state with an enlarged outer shape (e.g. Patent Documents 1 and 2). However, such deployable structures are based on folding an element with low rigidity. Therefore, they have the problem that elements with high rigidity cannot be folded.

### Citation List

### Patent Literature

Patent Document 1: JP 2007-308994 A
Patent Document 2: JP 2009-1183 A

### SUMMARY OF THE INVENTION

The present invention is based on the above-mentioned background, and aimed at providing a deployable structure which enables an element even with high rigidity to be folded.

In order to achieve the objective as described above, a deployable structure according to an embodiment of the present invention includes a pair of belt-shaped elements and a connecting element, each of the pair of belt-shaped elements extending along a longitudinal direction, wherein the connecting element connects the pair of belt-shaped elements so as to be freely deformable between a folded state and a deployed state, with corners of the pair of belt-shaped elements being close to each other on their front faces on one side in a thickness direction of the pair of belt-shaped elements, wherein the pair of belt-shaped elements extends in parallel to a predetermined plane in the folded state and perpendicular to the predetermined plane in the deployed state.

Further, ends of the pair of belt-shaped elements may be connected to the connecting element via first bent portions which are bendable convexly (mountain fold) on the front face along the longitudinal direction, wherein during a process from the folded state to the deployed state, the connecting element may maintain relative positions of a pair of first bent portions unmoved, each of the pair of first bent portions connecting one of the pair of belt-shaped elements to the connecting element.

Further, the pair of first bent portions may intersect each other in a predetermined angle, wherein the predetermined angle may be equal to an intersection angle of the pair of belt-shaped elements in the deployed state.

Further, at least one of lateral faces of the pair of belt-shaped elements and the connecting element which approach each other in the deployed state may have a first cutout which is configured to avoid an interference between the pair of belt-shaped elements and the connecting element in the deployed state.

Furthermore, lateral faces of the pair of belt-shaped elements which approach each other in the deployed state may have second cutouts which are configured to avoid an interference between the pair of belt-shaped elements in the deployed state.

Further, each of the pair of belt-shaped elements may include a pair of first opposite end elements, a pair of first coupling elements and a first middle element, wherein the pair of first opposite end elements form opposite ends of the belt-shaped element in the longitudinal direction, each of the pair of first coupling elements is coupled to one of the pair of first opposite end elements, and the first middle element is coupled between the pair of first coupling elements, wherein the first opposite end elements and the first coupling elements may be coupled to each other via second bent portions, the second bent portions intersecting the longitudinal direction, and wherein the first coupling elements and the first middle element may be coupled via third bent portions, the third bent portions intersecting the longitudinal direction.

Further, one of the second bent portions and third bent portions may be configured to be bent convexly on the front face, while another of the second bent portions and third bent portions may be bent concavely (valley fold) on the front face.

Further, the first middle element may include a pair of second opposite end elements, a pair of second coupling elements and a second middle element, wherein the pair of second opposite end elements form opposite ends of the first middle element in the longitudinal direction, each of the pair of second coupling elements is coupled to one of the pair of second opposite end elements, and the second middle element is coupled between the pair of second coupling elements, wherein the second opposite end elements and the second coupling elements may be coupled to each other via fourth bent portions, the fourth bent portions intersecting the longitudinal direction, and wherein the second coupling elements and the second middle element may be coupled via fifth bent portions, the fifth bent portions intersecting the longitudinal direction.

Furthermore, the deployable structure may include a plurality of units each including the pair of belt-shaped elements, wherein the units may be connected to each other so as to be freely bendable at ends in a belt width direction.

Furthermore, the deployable structure may have a tubular shape in the deployed state.

In the manner as described above, embodiments of the present invention enable even an element with high rigidity to be folded.

### BRIEF DESCRIPTION OF THE DRAWINGS

Fig.1 is a perspective view of a deployable structure according to a first embodiment in a folded state;
Fig.2 is a perspective view of the deployable structure according to Fig.1 in a state between the folded state and a deployed state;
Fig. 3 is a perspective view of the deployable structure according to Fig.1 in the deployed state;
Fig.4 is a perspective view of a pair of belt-shaped elements as parts of the deployable structure according to Fig. 1 on their front face side in the folded state, wherein the pair of belt-shaped elements is coupled to each other in a tube height direction;
Fig.5 is a perspective view on a back face side of Fig.4;
Fig.6 is a perspective view of the pair of belt-shaped elements according to Fig.4 in a state between the folded state and a deployed state;
Fig.7 is a perspective view of the pair of belt-shaped elements according to Fig.4 in the deployed state on their front face side;
Fig.8 is a perspective view of the pair of belt-shaped elements according to Fig.4 in the deployed state on their back face side;
Fig.9 is a partial enlarged view of a region around a connecting element 4A according to Fig.1;
Fig. 10 is a partial enlarged view of a region around the connecting element 4A according to Fig.3;
Fig. 11 is a partial sectional view of Fig.9 along the line I-I
Fig. 12 is a partial sectional view of Fig. 10 along the line II-II;
Fig. 13 is a partial top view of the deployable structure according to Fig.3 without the connecting elements;
Fig. 14 is a perspective view of a deployable structure according to a second embodiment in a folded state;
Fig. 15 is a perspective view of the deployable structure according to Fig. 14 in a state between the folded state and a deployed state;
Fig.16 is a perspective view of the deployable structure according to Fig. 14 in the deployed state;
Fig. 17 is a top view of the deployable structure according to Fig. 14;
Fig. 18 is a top view of the deployable structure according to Fig. 16;
Fig.19 is a perspective view of a pair of belt-shaped elements according to a third embodiment on their front face side in the folded state, wherein the pair of belt-shaped elements is coupled to each other in a tube height direction;
Fig.20 is a perspective view of one belt-shaped element according to Fig. 19 on its back face side;
Fig.21 is a perspective view of the pair of belt-shaped elements according to Fig. 19 in a state between the folded state and a deployed state;
Fig.22 is a perspective view of the pair of belt-shaped elements according to Fig. 19 in the deployed state on their front face side;
Fig.23 is a perspective view of the pair of belt-shaped elements according to Fig. 19 in the deployed state on their back side;
Fig.24 is top views of a deployable structure according to exemplary variations of the first to third embodiments;
Fig.25 is a perspective view of a deployable structure according to a fourth embodiment in a folded state;
Fig.26 is a perspective view of the deployable structure according to Fig.25 in a state between the folded state and a deployed state; and
Fig.27 is a perspective view of the deployable structure according to Fig.25 in the deployed state.

### DETAILED DESCRIPTION OF THE PREFERRED EMBODIMENTS

### (First Embodiment)

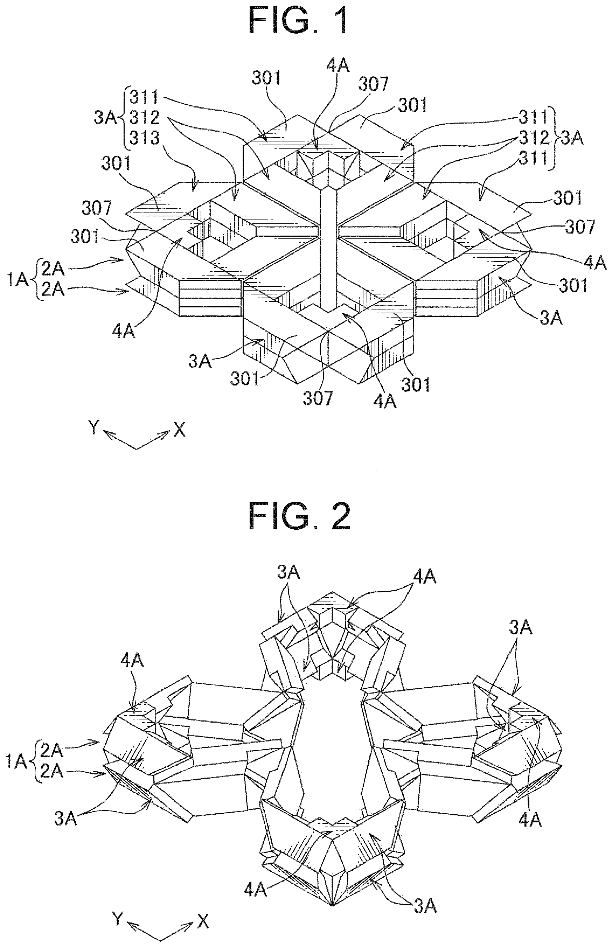

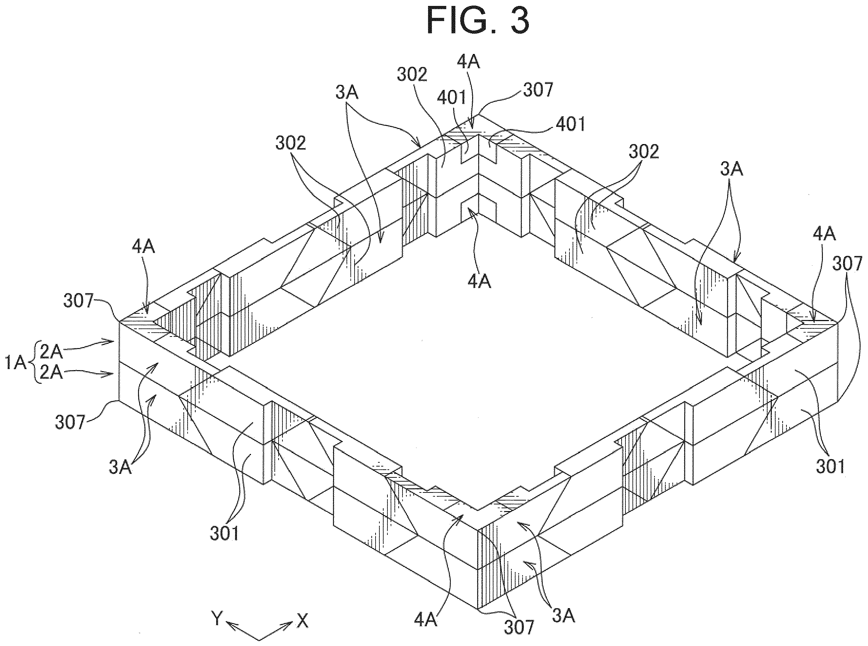

Hereinafter, a deployable structure according to a first embodiment of the present invention will be described with reference to Figs. 1 to 13. The deployable structure 1A according to the first embodiment is a structure which is freely deformable between a deployed state in a quadrilateral tubular shape (Fig.3) and a folded state (Fig. 1), wherein in the folded state, the structure is folded so as to be reduced in its tube diameter and tube height in comparison with the deployed state. The deployable structure 1A includes a plurality of tubular units 2A connected in a tube height direction. According to the present embodiment, the deployable structure 1A includes two tubular units 2A.

Each of the tubular units 2A includes four belt-shaped elements 3A and four connecting elements 4A, wherein each of the belt-shaped elements 3A forms one face of the quadrilateral tube and the connecting elements 4A connect the four belt-shaped elements 3A to each other.

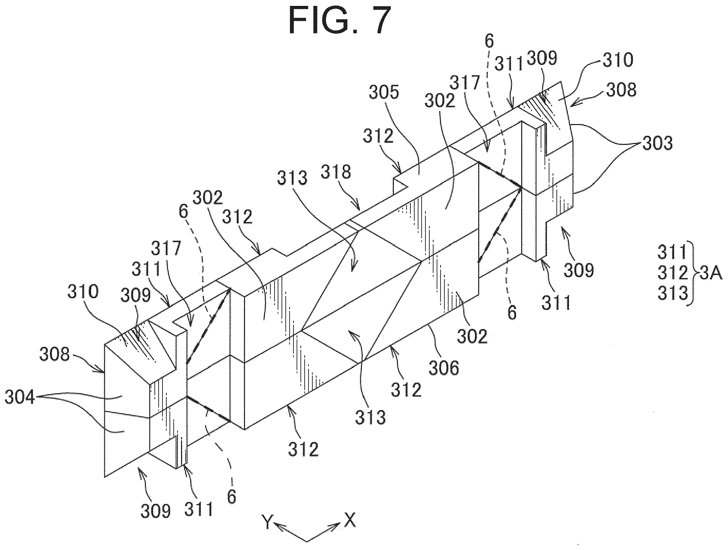

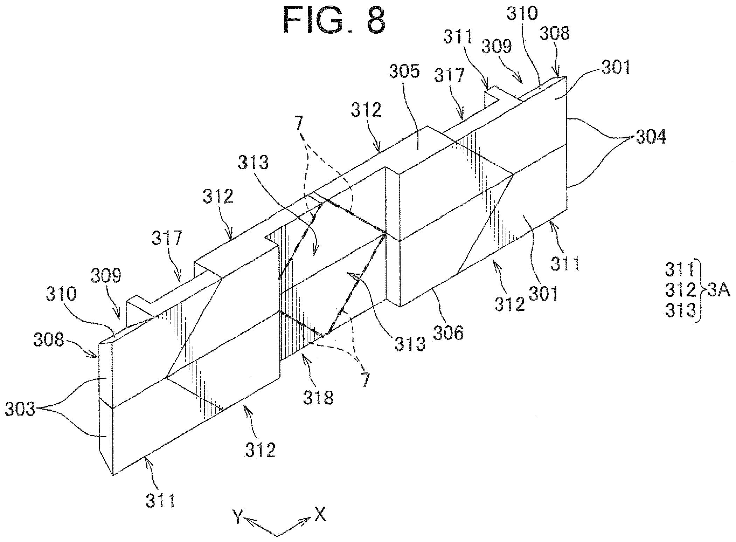

As shown in Figs.7 and 8, each of the four belt-shaped elements 3A has a belt shape with a predetermined length, width and thickness in the deployed state. The four belt-shaped elements 3A are formed with rigid bodies which have a significant thickness and no flexibility. Each of the belt-shaped elements 3A has a rectangular front face 301 and back face 302, lateral faces 303 and 304 opposed to each other in a longitudinal direction, and lateral faces 305 and 306 opposed to each other in a width direction, wherein the front face 301 and the back face 302 extend along the longitudinal direction and the width direction and are opposed to each other in a thickness direction in the deployed state.

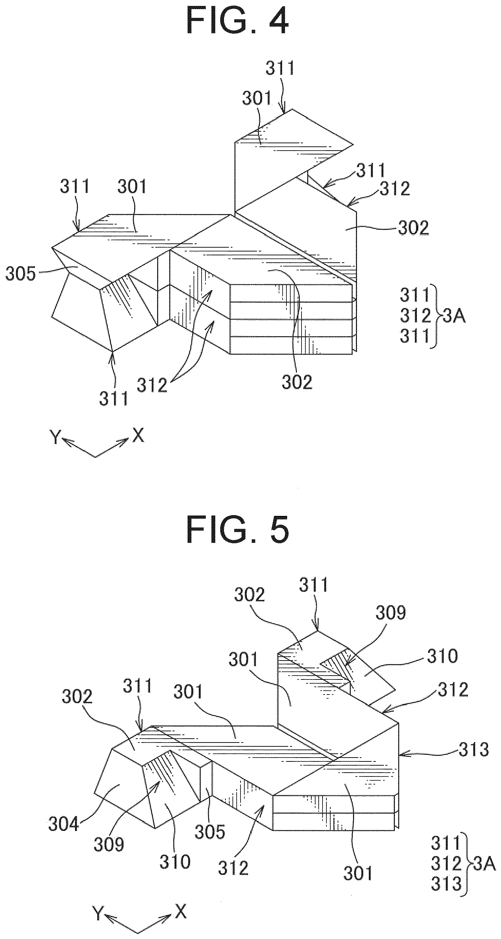

The four belt-shaped elements 3A are configured so as to be freely deformable between the deployed state as shown in Figs.7 and 8 and the folded state as shown in Figs.4 and 5, wherein the belt-shaped elements 3A take a belt shape in the deployed state, and are folded in a U-shape in the folded state, protruding in a middle portion in the width direction. Configuration of the four belt-shaped elements 3A will be described in details below.

Next, arrangements of the four belt-shaped elements 3Ain the folded state and the deployed state will be described. In the folded state, the four belt-shaped elements 3A are arranged so that their thickness direction is arranged in parallel to the tube height direction as shown in Fig. 1, wherein the belt-shaped elements 3A each are oriented in parallel to a predetermined plane xy. This means that the belt-shaped elements 3A are arranged on the same plane in the folded state. It is to be noted that the predetermined plane xy is a perpendicular plane to the tube height direction.

Furthermore, a pair of belt-shaped elements 3A, 3A which are adjacent to each other in the folded state are arranged so that corners 307 are in contact with each other on front faces 301 of first opposite end elements 311 as described below, and ends of the front faces 301 form an angle of 90 degrees (= interior angle of a quadrilateral) with each other, the ends extending from the corners 307 along the longitudinal direction.

In the deployed state, the four belt-shaped elements 3A are further arranged so that their width direction is arranged in parallel to the tube height direction as shown in Fig.3, wherein the belt-shaped elements 3A each are oriented perpendicular to the predetermined plane xy. At this time, the belt-shaped elements 3A are arranged so that the front faces 301 form an outer surface of the quadrilateral tube and the back faces 302 form an inner surface of the quadrilateral tube. Furthermore, a pair of belt-shaped elements 3A, 3A which are adjacent to each other in the deployed state are arranged so that corners 307 are in contact with each other, wherein the pair of belt-shaped elements 3A, 3A form an angle of 90 degrees with each other.

The four connecting elements 4A are connect the belt-shaped elements 3A in pairs so that the belt-shaped elements 3A are freely deformable between the folded state and the deployed state with the corners 307 of each pair of belt-shaped elements 3A, 3A being in contact with each other.

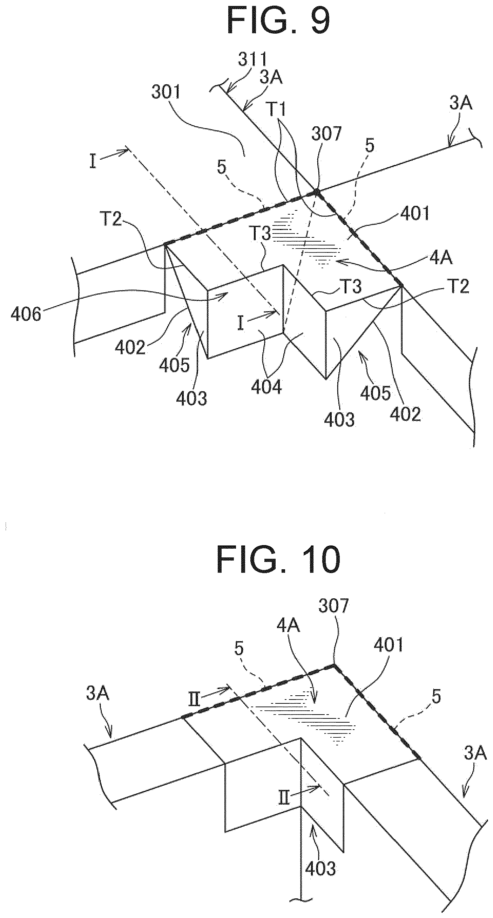

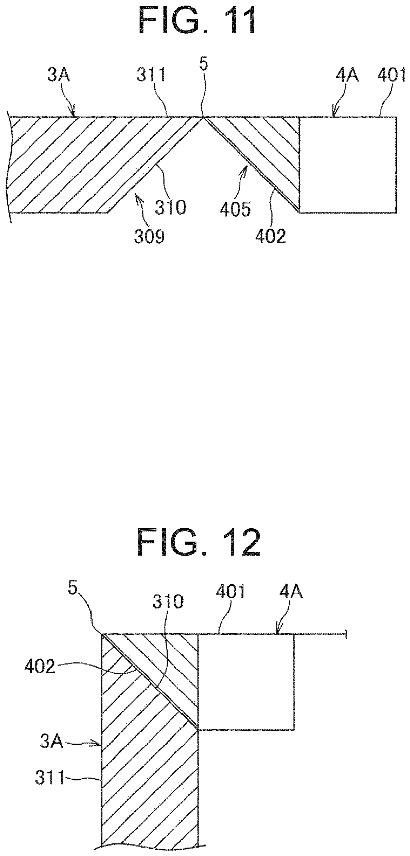

As shown in Figs. 9 to 12, each of the connecting elements 4A according to the present embodiment has a same thickness as the belt-shaped elements 3A, and includes a front face 401 and pairs of lateral faces 402, 402, 403, 403, 404, 404, wherein the front face 401 extends orthogonally to the tube height direction, and the pairs of lateral faces 402, 402, 403, 403, 404, 404 are coupled to ends of the front face 401. The front face 401 is arranged on the same plane as the front faces 301 of the belt-shaped elements 3A in the first opposite end elements 311 in the folded state (Fig. 11), and arranged orthogonally to the front faces 301 in the deployed state (Fig. 12).

Further, the front faces 401 are configured in a substantially quadrilateral shape (substantially square shape in the present embodiment) as shown in Fig.9. The front face 401 is further arranged so that a pair of ends T1, T1 of the front face 401 abut on the ends of the front faces 301 of the pair of belt-shaped elements 3A which extend from the corner 307 in the longitudinal direction, the pair of ends T1, T1 each forming one side of the square and intersecting each other at an angle of 90 degrees. The front face 401 further has a fourth cutout 406 at a corner opposed to the corner 307.

Each of the pair of lateral faces 402, 402 is connected to one of the pair of ends T1, T1 of the front faces 301. Each of a pair of lateral faces 403, 403 is connected to one of a pair of ends T2, T2 which each forms one side of the square and intersects a corresponding one of the pair of ends T1, T2 at an angle of 90 degrees, wherein each of the pair of lateral faces 403, 403 extends orthogonally to the front faces 301.

Each of a pair of lateral faces 404, 404 is connected to one of ends T3, T3 of the front face 401 which are formed by the fourth cutout 406, and extends orthogonally to the front faces 301. Further, the pair of lateral faces 404, 404 extends orthogonally to each other, wherein the lateral faces 404, 404 is arranged in the same plane as the back faces 302 of the belt-shaped elements 3A in the deployed state, as shown in Fig.3.

Each of the ends of the front faces 301 of the pair of belt-shaped elements 3A, 3A extending in the longitudinal direction from the corner 307 is connected to one of the pair of ends T1, T1 of the front face 401 of the connecting element 4A only via first bent portions 5, wherein the first bent portions 5 are bendable along the ends. These first bent portions 5 allow the pair of belt-shaped elements 3A, 3A and the connecting element 4A to be bent along the longitudinal direction and convexly on the front faces 301 and 401.

The first bent portions 5 are formed from a thin and flexible element with low rigidity like adhesive tapes, and connect the ends of the front face 301 of the belt-shaped elements 3A and the ends of the front face 401 of the connecting element 4A which abut on each other. Although according to the present embodiment, the first bent portions 5 are explained with reference to the adhesive tapes as an example, the first bent portions 5 are not limited thereto, but may be anything which is configured to be freely bendable. For example, the first bent portions 5 may be formed by freely bendable metal fittings like hinges, instead of adhesive tapes.

The first bent portions 5 which each connect one of the pair of belt-shaped elements 3A, 3A to the connecting element 4A intersect each other at an angle of 90 degrees (predetermined angle). This angle is equal to an intersection angle of the pair of belt-shaped elements 3A, 3A in the deployed state. The connecting element 4A maintains relative positions of the pair of first bent portions 5 unmoved during a process from the folded state to the deployed state.

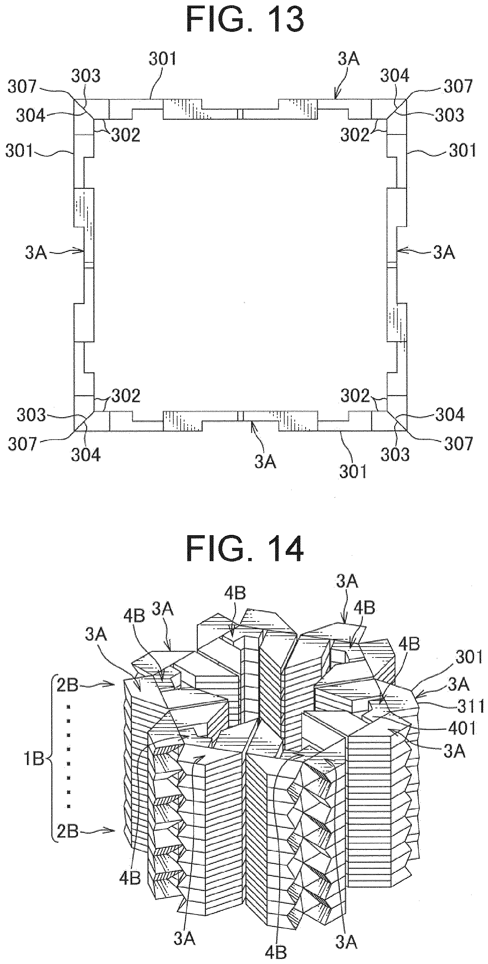

Furthermore, the lateral faces 303, 304 of the pair of belt-shaped elements 3A, 3A which approach each other in the deployed state have second cutouts 308 formed therein which avoid a mutual interference of the pair of belt-shaped elements 3A, 3A in the deployed state, as shown in Figs.7 and 8. Each of the second cutouts 308 extends from the front face 301 to the back face 302, wherein with the second cutouts 308, the lateral face 303 and the lateral face 304 are configured as oblique surfaces which have a reduced longitudinal dimension toward the back face 302. Then, the lateral face 303 and the lateral face 304 of the pair of belt-shaped elements 3A, 3A come into contact with each other in the deployed state, as shown in Fig. 13. It is to be noted that Fig. 13 shows a partial top view of the deployable structure according to Fig.3 without the connecting elements.

Further, the lateral faces 305 of the belt-shaped elements 3A which are facing the corners 307 and approach the connecting element 4A in the deployed state have first cutouts 309 which avoid interference with the connecting element 4A in the deployed state, as shown in Figs.7 and 8. Each of the first cutouts 309 is cut out from an end of the front face 301 to the back face 302, the end of the front face 301 being coupled to the first bent portion 5, wherein with the first cutouts 309, the lateral face 305 is provided with oblique surfaces 310 at opposite ends in the longitudinal direction which have a reduced width dimension toward the back face 302.

Also the lateral faces 402, 402 of the connecting element 4A which each approach the pair of belt-shaped elements 3A, 3A in the deployed state have first cutouts 405 which avoid interference with the belt-shaped elements 3A, 3A in the deployed state, as shown in Fig.9. The first cutouts 405 are provided so that ends of the lateral faces 402, 402 located farther from the front face 401 intersect ends of the lateral faces 404, 404 located farther from the front face 401. With the first cutouts 405, the lateral faces 402, 402 are configured as oblique surfaces which have a distance from the belt-shaped elements 3A, 3A, the distance being increased in a direction away from the front face 401 in the folded state, as shown in Fig. 11. Then, the oblique surfaces 310 of the pair of belt-shaped elements 3A, 3A come into contact with the lateral faces 402, 402 of the connecting element 4A in the deployed state, as shown in Fig. 12.

Next, configuration of the belt-shaped element 3A will be described in more details. As shown in Figs.7 and 8, the belt-shaped elements 3A are formed with thick rigid bodies which have no flexibility, wherein each of the belt-shaped elements 3A is subdivided into five elements, i.e. a pair of first opposite end elements 311, a pair of first coupling elements 312 and a first middle element 313. The pair of first opposite end elements 311 form both opposite ends of the belt-shaped element 3A in the longitudinal direction. The pair of coupling elements 312 is coupled to the pair of first opposite end elements 311. The first middle element 313 is coupled between the pair of first coupling elements 312.

The pair of first opposite end elements 311, the pair of first coupling elements 312 and the first middle element 313 are coupled to each other via second bent portions 6 and third bent portions 7 as described below which have a small thickness and flexibility. The belt-shaped elements 3A are freely bendable along the second bent portions 6 and the third bent portions 7. Although according to the present embodiment, the second bent portions 6 and the third bent portions 7 are explained with reference to the adhesive tapes as an example, the second bent portions 6 and the third bent portions 7 are not limited thereto, but may be anything which is configured to be freely bendable. For example, they may be formed by freely bendable metal fittings like hinges, instead of adhesive tapes.

The first opposite end elements 311 have the above-described second cutouts 308 and first cutouts 309. Subdivision into the first opposite end elements 311 and the first coupling elements 312 occurs in the longitudinal direction along division lines which intersect the longitudinal direction at an angle of 45 degrees, wherein the first opposite end elements 311 and the first coupling elements 312 are coupled to each other via the second bent portions 6 which extends along the division lines. The second bent portions 6 connect ends of the first opposite end elements 311 and the first coupling elements 312 which extend along division lines in the back face 302. Here, the second bent portions 6 extend obliquely so as to more approach the middle in the longitudinal direction toward the lateral faces 305. This means that a pair of second bent portions 6 which each couple the pair of first opposite end elements 311 to the pair of first coupling elements 312 form a right angle with each other.

Further, subdivision into the pair of first coupling elements 312 and the first middle element 313 occurs in the longitudinal direction along division lines which intersect the longitudinal direction at an angle of 45 degrees, wherein the pair of first coupling elements 312 and the first middle element 313 coupled to each other via the third bent portions 7 which along the division lines. The third bent portions 7 connect ends of the first coupling elements 312 and the first middle element 313 which extend along division lines in the front face 301. Here, the third bent portions 7 have ramps which more approach the middle in the longitudinal direction toward the lateral faces 305. This means that a pair of third bent portions 7 which each couple the pair of first coupling elements 312 to the first middle element 313 form a right angle with each other. According to the present embodiment, the pair of third bent portions 7 are separated at an end facing the lateral face 305.

When being bent along the third bent portions 7 and concavely on the front face 301, the belt-shaped elements 3A, 3A are folded so that the lateral faces 305 of the first coupling elements 312 coupled to the first middle element 313 are brought closer. According to the present embodiment, the belt-shaped elements 3A, 3A are folded so that the lateral faces 305 of the pair of first coupling elements 312 are opposite to and spaced from each other (see Fig.4). On the other hand, when being bent along the second bent portions 6 and convexly on the front face 301, the belt-shaped elements 3A, 3A are folded so that the longitudinal directions of the first opposite end elements 311 and the first coupling elements 312 extend orthogonally to each other. In this manner, the belt-shaped elements 3A protrude in the middle toward one side in the width direction and are folded in a U-shape. In the folded state, the belt-shaped elements 3A are arranged so that the one side on which each belt-shaped element 3A protrudes in the middle is oriented inwardly in the tube, as shown in Fig.1.

Further, the back faces 302 of the belt-shaped elements 3A have fifth cutouts 317 formed therein which avoid interference of the first opposite end elements 311 and the first coupling elements 312 in the folded state, as shown in Fig.7. These fifth cutouts 317 are provided at ends of the first opposite end elements 311 and the first coupling elements 312 which overlap with each other in the thickness direction in the folded state. With the fifth cutouts 317, the pair of first opposite end elements 311 and the first coupling elements 312 have a thickness in portions overlapping with each other which is reduced to half of a thickness of the remainder.

Further, the front faces 301 of the belt-shaped elements 3A have sixth cutouts 318 formed therein which avoid interference of the first coupling elements 312 and the first middle element 313 in the folded state, as shown in Fig.8. These sixth cutouts 318 are provided in portions of the first coupling elements 312 and the first middle element 313 which overlap with each other in the thickness direction in the folded state. With the sixth cutout 318, the pair of first coupling elements 312 and the first middle element 313 have a thickness in the portions overlapping with each other which is reduced to half of a thickness of the remainder.

Then, in the folded state, the front faces 301 of the first opposite end elements 311 and the back faces 302 of the first coupling elements 312 are arranged in the same plane, as shown in Fig.4. Further, the back faces 302 of the first opposite end elements 311, the front faces of the first coupling elements 312 and the front face 301 of the first middle element 313 are arranged in the same plane, as shown in Fig.5.

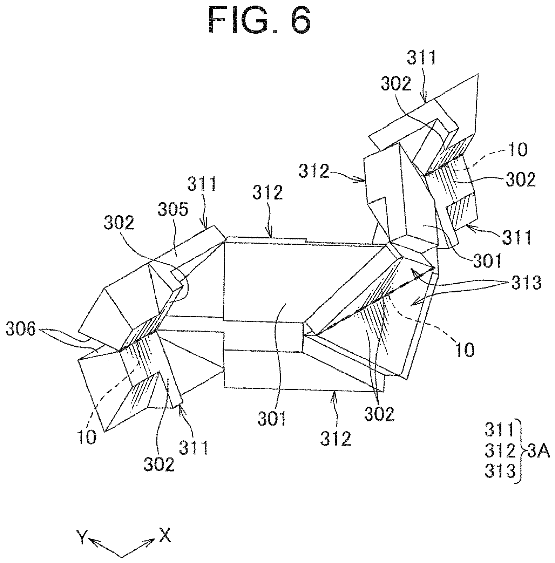

Furthermore, the tubular units 2A are coupled to each other in the tube height direction and folded in a bellows form. The coupling is accomplished so that the lateral faces 306 of the pair of belt-shaped elements 3A which are adjacent to each other in the tube height direction in the deployed state (Fig.6) come into contact with each other. Further, the front face 301 and the back face 302 of one of the pair of belt-shaped elements 3A which are adjacent to each other in the tube height direction in the folded state come into contact with the front face 301 and the back face 302 of the other of the pair of belt-shaped elements 3A, respectively.

In more details, for the pair of belt-shaped elements 3A which are arranged in series in the tube height direction, ends of the pair of first opposite end elements 311 facing the lateral face 306 on the back faces 302 are coupled to each other, ends of the pair of first coupling elements 312 facing the lateral face 306 on the back faces 302 are coupled to each other, and ends of the first middle elements 313 facing the lateral face 306 on the back face 302 are coupled to each other, wherein these couplings are accomplished via the sixth bent portions 10, as shown in Fig.6.

Should more tubular units 2A be provided, they are coupled in the tube height direction so that the lateral faces 305 of the belt-shaped elements 3A come into contact with each other in the deployed state. Then, for belt-shaped elements 3A-3B of a pair of tubular units 2A whose lateral faces 305 come into contact with each other, their ends of the pair of first opposite end elements 311 facing the lateral face 305 on the back faces 302 are coupled to each other, ends of the pair of first coupling elements 312 facing the lateral face 305 on the back faces 302are coupled to each other, and ends of the first middle elements 313 facing the lateral face 305 on the back face 302are coupled to each other, wherein these couplings are accomplished via seventh bent portions (now shown).

This means that in case of three or more tubular units 2A being coupled, the lateral face 305 and the lateral face 306 of one of the belt-shaped elements 3A are coupled to the lateral face 305 and the lateral face 306 of the other of the belt-shaped elements 3A respectively in the tube height direction in an alternating manner in the deployed state, wherein in the folded state, adjacent tubular units 2A are folded via the sixth bent portions 12 and seventh bent portions (not shown) so as to repeatedly alternate convex and concave foldings.

With the above-described configuration, by being bent along the sixth bent portions 10 from the deployed state with the quadrilateral-tubular shape according to Fig.3, the deployable structure 1A is folded so that belt-shaped elements 3A arranged in series in the tube height direction overlap with each other in the thickness direction, whereby the deployable structure 1A is reduced in its tube height. Further, by being folded along the second bent portions 6, the third bent portions 7, the pair of coupling elements and the first opposite end elements are folded inwardly in the quadrilateral tube to be reduced in its tube diameter.

According to the first embodiment as described above, the connecting element 4A connects the pair of belt-shaped elements 3A, 3A so as to be freely deformable between the folded state and the deployed state, with the corners 307 of the pair of belt-shaped elements being close to each other on their front faces 301 on one side in the thickness direction of the pair of belt-shaped elements 3A, 3A, wherein the pair of belt-shaped elements 3A, 3A extends in parallel to the predetermined plane xy in the folded state and perpendicular to the predetermined plane xy in the deployed state. In this manner, even if the belt-shaped elements 3A are formed from elements with high rigidity, it is possible to fold them.

According to the deployable structure 1A of the first embodiment as described above, the ends of the pair of belt-shaped elements 3A, 3A are connected to the connecting element 4A via the first bent portions 5 which are bendable convexly on the front face 301 along the longitudinal direction, wherein during a process from the folded state to the deployed state, the connecting element 4A maintains relative positions of the pair of first bent portions 5 unmoved. In this manner, it is possible to guide change of the pair of belt-shaped elements 3A, 3A into the deployed state by the connecting element 4A.

Further, according to the deployable structure 1A of the first embodiment as described above, the first bent portions 5 which each connect the pair of belt-shaped elements 3A, 3A to the connecting element 4A intersect each other in an angle of 90 degrees, wherein this angle of 90 degrees is equal to the intersection angle of the pair of belt-shaped elements 3A, 3A in the deployed state. In this manner, it is possible to guide change of the pair of belt-shaped elements 3A, 3A into the deployed state by the connecting element 4A.

Furthermore, according to the deployable structure 1A of the first embodiment as described above, the lateral faces 305, 403, 404 of the pair of belt-shaped elements 3A, 3A and the connecting element 4A which approach each other in the deployed state have first cutouts 309, 405 which is configured to avoid an interference with each other in the deployed state. It is possible to fold the belt-shaped elements 3A without interference of the belt-shaped elements 3A with the connecting element 4A.

Further, according to the deployable structure 1A of the first embodiment as described above, the lateral faces 303, 304 of the pair of belt-shaped elements 3A, 3A which approach each other have second cutout 308 which are configured to avoid an interference between the pair of belt-shaped elements 3A, 3A in the deployed state. This enables the pair of belt-shaped elements 3A to be folded without interference of the belt-shaped elements 3A, 3A with each other.

Furthermore, according to the deployable structure 1A of the first embodiment as described above, each of the belt-shaped elements 3A includes a pair of first opposite end elements 311, a pair of first coupling elements 312 and the first middle element 313, wherein the pair of first opposite end elements 311 form opposite ends of the belt-shaped element 3A in the longitudinal direction, each of the pair of first coupling elements 312 is coupled to one of the pair of first opposite end elements 311, and the first middle element 313 is coupled between the pair of first coupling elements 312. In addition, the first opposite end elements 311 and the first coupling elements 312 are coupled to each other via the second bent portions 6, the second bent portions 6 intersecting the longitudinal direction at an angle of 45 degrees, wherein the first coupling elements 312 and the first middle element 313 are connected via the third bent portions 7, the third bent portions 7 extending in parallel to the second bent portions 6. In this manner, it is possible to bend the belt-shaped elements 3A in the middle portion in the width direction and to reduce the longitudinal dimension in the folded state.

Further, according to the deployable structure 1A of the first embodiment as described above, the second bent portions 6 are configured to be bent convexly on the front face 301, while the third bent portions 7 are configured to be bent concavely on the front face 301. This also enables a dimension in the thickness direction to be reduced when folding.

Furthermore, according to the deployable structure 1A of the first embodiment as described above, it includes a plurality of tubular units 2A each including the pair of belt-shaped elements 3A, wherein the tubular units 2A are connected to each other so as to be bendable at ends in a belt width direction. This enables the deployable structure 1A to be folded so that belt-shaped elements 3A arranged in series in the tube height direction overlap with each other in the thickness direction in the folded state, whereby the deployable structure 1A can be reduced in its tube height.

### (Second Embodiment)

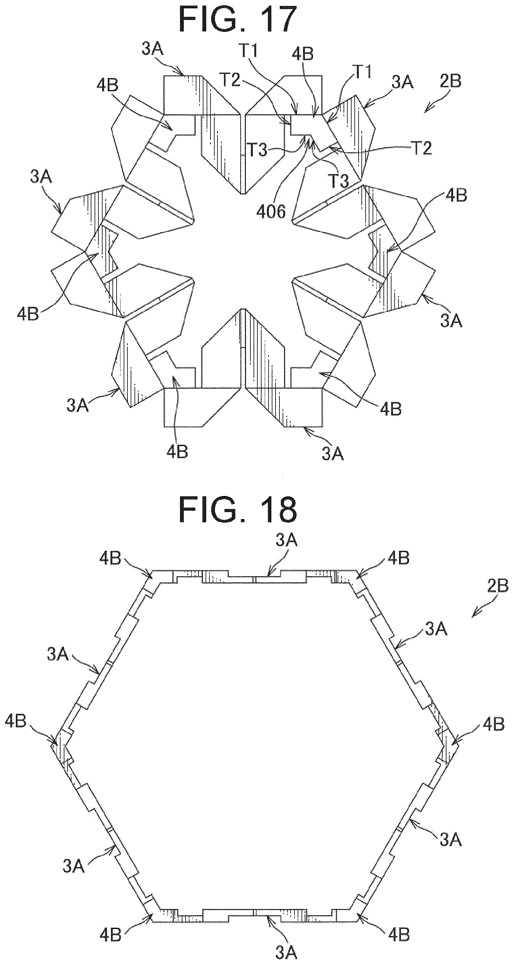

Next, a second embodiment will be described with reference to Figs. 14 to 18. In these Figures, similar features to those in the first embodiment which have been already described with reference to Figs.1 to 17 are designated with the same reference signs, and the corresponding detailed description will be omitted.

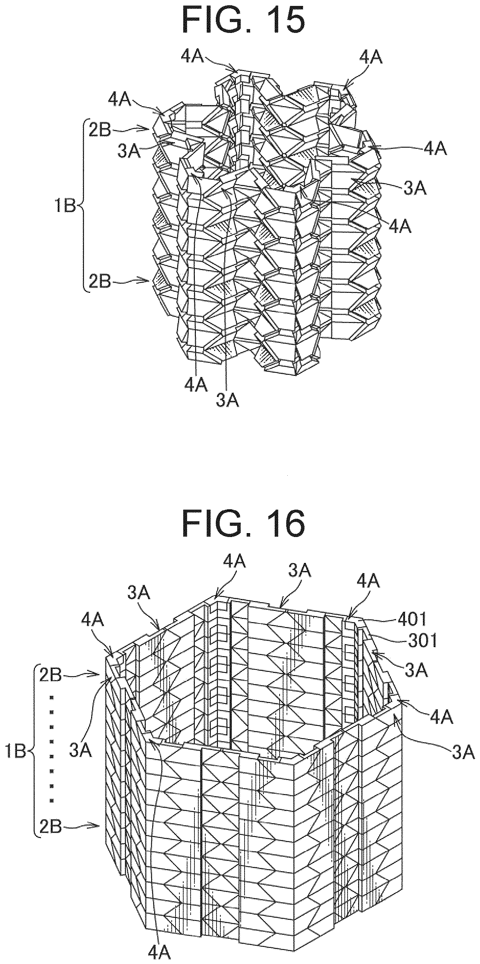

As shown in this Figure, a deployable structure 1B according to the second embodiment is a structure which is freely deformable between a deployed state in a hexagonal tubular shape (Fig. 16) and a folded state (Fig. 14), wherein in the folded state, the structure is folded so as to be reduced in its tube diameter and tube height in comparison with the deployed state. The deployable structure 1B includes a plurality of tubular units 2B connected in a tube height direction. According to the present embodiment, the deployable structure 1B includes twelve tubular units 2B.

Each of the tubular units 2B includes six belt-shaped elements 3A and six connecting elements 4B, wherein each of the belt-shaped elements 3A forms one face of the hexagonal tube and the connecting elements 4B connect the six belt-shaped elements 3A to each other. Since the six belt-shaped elements 3A are configured in a similar manner to the belt-shaped elements 3A as described in the first embodiment, the corresponding detailed description will be omitted.

Next, arrangements of the six belt-shaped elements 3A in the folded state and the deployed state will be described. The first embodiment differs from the second embodiment in an angle formed by ends of the front face 301 therebetween which extend from the corners 307 in the longitudinal direction. While this angle according to the first embodiment is 90 degrees, the angle according to the second embodiment is 120 degrees which is an interior angle of a regular hexagon. Similarly, a pair of belt-shaped elements 3A, 3A which are adjacent to each other in the deployed state forms an angle of 120 degrees therebetween, as shown in Fig. 16.

Accordingly, the connecting elements 4B also has a shape which differs from that of the first embodiment. Each of the connecting elements 4B according to the second embodiment includes a front face 401 and pairs of lateral faces 402, 402, 403, 403, 404, 404 (not shown in Figs. 14 to 18), wherein the front face 401 extends orthogonally to the tube height direction, and the pairs of lateral faces 402, 402, 403, 403, 404, 404 are coupled to ends of the front face 401.

According to the first embodiment, the front faces 401 of the connecting elements 4A are configured in a substantially square shape, wherein ends T1, T1 of each of the front faces 401 each forming one side of the square intersect each other at an angle of 90 degrees which is an internal angle of a square. In contrary, the second embodiment provides that the front faces of the connecting elements 4B are configured in a substantially quadrilateral shape, wherein ends T1, T1 of each of the front faces 401 each forming one side of the quadrilateral intersect each other at an angle of 120 degrees which is an internal angle of a regular hexagon.

In this manner, it is possible to fold even a hexagonal tube in a similar manner to the first embodiment.

### (Third Embodiment)

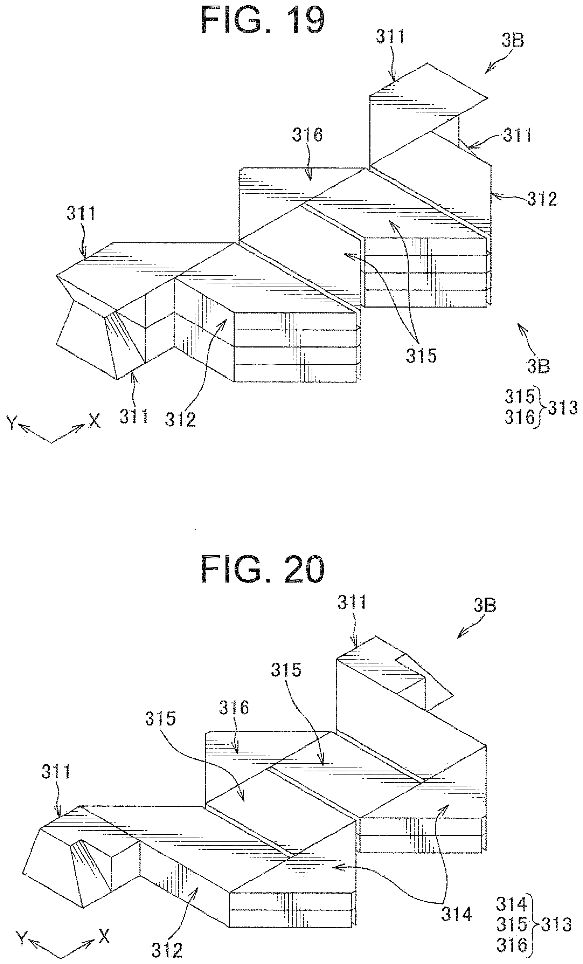

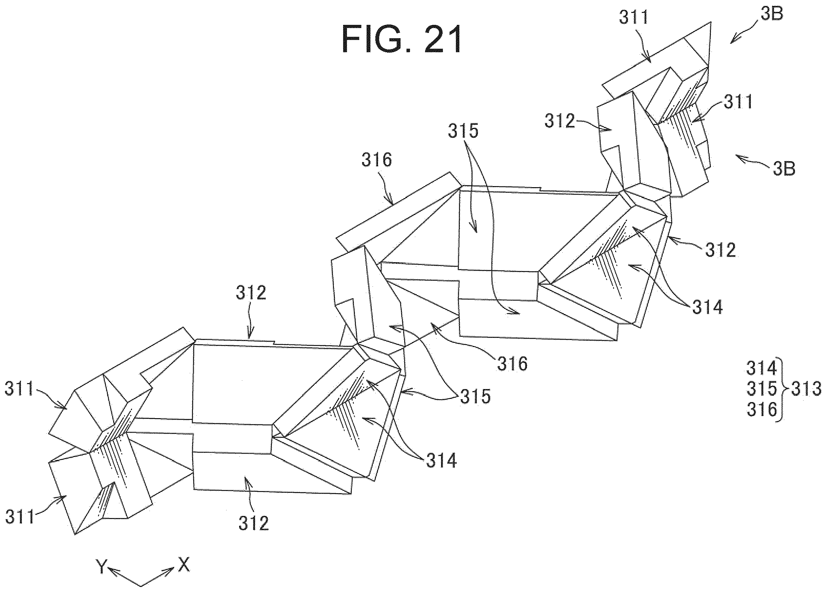

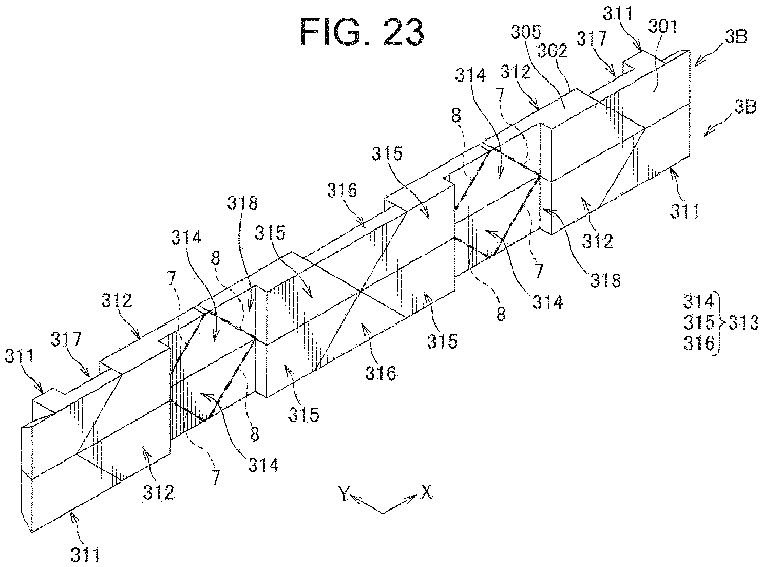

Next, a third embodiment will be described with reference to Figs. 19 to 23. Although the first and second embodiments provide that the belt-shaped elements 3A is subdivided into five elements and freely bendable, as shown in Figs. 7 and 8, it is not limited thereto. Instead of the belt-shaped elements 3A as shown in Figs.7 and 8, belt-shaped elements 3B as shown in Figs. 19 to 23 may be used which are subdivided into 10 elements.

It is to be noted that similar features in Figs. 19 to 23 to those of the belt-shaped elements 3A in the above-described first and second embodiments which have been already described are designated with the same reference signs, and the corresponding detailed description will be omitted. As shown in these Figures, each of the belt-shaped elements 3B is subdivided into a pair of first opposite end elements 311, a pair of first coupling elements 312 and a first middle element 313 in a similar manner to the first embodiment. According to the third embodiment, the first middle element 313 is further subdivided into a pair of opposite end elements 314, a pair of second coupling elements 315 and a second middle element 316, wherein the pair of opposite end elements 314 form opposite ends of the first middle element 313 in the longitudinal direction, the pair of second coupling elements 315 is coupled to the opposite end elements 314, and the second middle element 316 is coupled between the second coupling elements 315. This means that the belt-shaped elements 3B according to the third embodiment each are subdivided into 9 elements.

The pair of first opposite end elements 311, the pair of first coupling elements 312, as well as the pair of second opposite end elements 314, the pair of second coupling elements 315 and the second middle element 316 which form the first middle element 313 are freely bendable to each other along second bent portions 5, third bent portions 6, fourth bent portions 7 and fifth bent portions 8, wherein these bent portions 5, 6, 7 and 8 have a small thickness and flexibility like adhesive tapes.

Similarly to the first embodiment, subdivision into the first opposite end elements 311 and the first coupling elements 312 occurs in the longitudinal direction along division lines which intersect the longitudinal direction at an angle of 45 degrees, wherein the first opposite end elements 311 and the first coupling elements 312 are coupled to each other via the second bent portions 6 which extends along the division lines. The second bent portions 6 connect ends of the first opposite end elements 311 and the first coupling elements 312 which extend along division lines in the back face 302. Here, the second bent portions 6 extend obliquely so as to more approach the middle in the longitudinal direction toward the lateral faces 305. This means that a pair of second bent portions 6 which each couple the pair of first opposite end elements 311 to the pair of first coupling elements 312 form a right angle with each other.

Further, subdivision into the pair of first coupling elements 312 and the pair of second opposite end elements 314 occurs in the longitudinal direction along division lines which intersect the longitudinal direction at an angle of 45 degrees, wherein the pair of first coupling elements 312 and the pair of second opposite end elements 314 are coupled to each other via the third bent portions 7 which along the division lines. The third bent portions 7 connect ends of the first coupling elements 312 and the second opposite end elements 314 which extend along division lines in the front face 301. Here, the third bent portions 7 have ramps which more approach the middle in the longitudinal direction toward the lateral faces 305. This means that a pair of third bent portions 7 which each couple the pair of first coupling elements 311 to the second opposite end elements 314 form a right angle with each other.

Further, subdivision into the pair of second opposite end elements 314 and the pair of second coupling elements 315 occurs in the longitudinal direction along division lines which intersect the longitudinal direction at an angle of 45 degrees, wherein the pair of second opposite end elements 314 and the pair of second coupling elements 315 are coupled to each other via the fourth bent portions 8 which along the division lines. The fourth bent portions 8 connect ends of the second opposite end elements 314 and the second coupling elements 315 which extend along division lines in the front face 301. Here, the fourth bent portions 8 extend obliquely which more approach opposite ends in the longitudinal direction toward the lateral faces 305. This means that a pair of fourth bent portions 8 which each couple the second opposite end elements 314 to the pair of second coupling elements 315 form a right angle with each other.

Further, subdivision into the pair of second coupling elements 315 and the second middle element 316 occurs in the longitudinal direction along division lines which intersect the longitudinal direction at an angle of 45 degrees, wherein the pair of second coupling elements 315 and the second middle element 316 are coupled to each other via the fifth bent portions 9 which along the division lines. The fifth bent portions 9 connect ends of the second coupling elements 315 and the second middle element 316 which extend along division lines in the back face 302. Here, the fifth bent portions 9 have ramps which more approach the middle in the longitudinal direction toward the lateral faces 305. This means that a pair of third bent portions 9 which each couple the pair of second coupling elements 315 to the second middle element 316 form a right angle with each other. According to the present embodiment, the pair of third bent portions 9 intersect each other at an end facing the lateral face 305.

When bending the front face 301 convexly along the fifth bent portions 9, the belt-shaped element 3B is folded so that the lateral faces 306 of the pair of second coupling elements 315 coupled to the second middle element 316 approach each other. According to the present embodiment, the belt-shaped element 3B is folded so that the lateral faces 306 of the pair of second coupling elements 315 come into contact with each other. Further, when bending the front face 301 concavely along the third bent portions 7 and the fourth bent portions 8, the belt-shaped element 3B is folded so that the lateral faces 305 of the first coupling elements 312 and the second coupling elements 315 approach each other which are coupled to the second opposite end elements 314. According to the present embodiment, the belt-shaped element 3B is folded the lateral faces 305 of the first coupling elements 312 and the second coupling elements 315 come into contact with each other. When bending the front face 301 convexly along the second bent portions 6, the belt-shaped element 3B is bent so that the longitudinal directions of the first opposite end elements 311 and the first coupling elements 312 are orthogonal. In this manner, the belt-shaped element 3B protrudes in its middle toward one side in the width direction and is folded in a W-shape. In the folded state, the belt-shaped elements 3B are arranged so that the one side on which each belt-shaped element 3B protrudes in the middle is oriented inwardly in the tube.

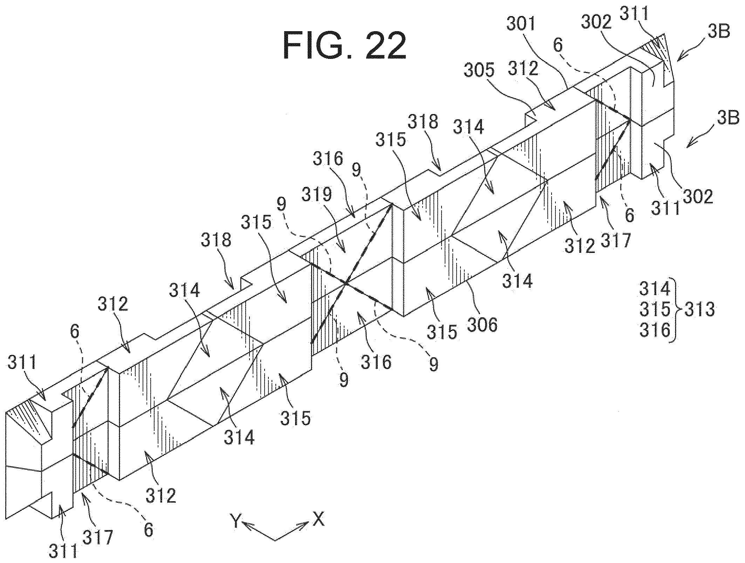

Further, the back faces 302 of the belt-shaped elements 3B have fifth cutouts 317 formed therein which avoid interference of the first opposite end elements 311 and the first coupling elements 312 in the folded state, as shown in Fig.22. These fifth cutouts 317 are provided at ends of the first opposite end elements 311 and the first coupling elements 312 which overlap with each other in the folded state. With the fifth cutouts 317, the pair of first opposite end elements 311 and the pair of first coupling elements 312 have a thickness in portions overlapping with each other which is reduced to half of a thickness of the remainder.

Further, the front faces 301 of the belt-shaped elements 3B have sixth cutouts 318 formed therein which avoid interference of the first coupling elements 312 with the second opposite end elements 314 and interference of the second opposite end elements 314 with the second coupling elements 315 in the folded state, as shown in Fig.22. These sixth cutouts 318 are provided in portions of the first coupling elements 312 and the second opposite end elements 314 as well as portions of the second opposite end elements 314 and the second coupling elements 315 which overlap with each other in the folded state respectively. With the sixth cutouts 318, the pair of first coupling elements 312, the second opposite end elements 314 and the second coupling elements 315 have a thickness in the portions overlapping with each other which is reduced to half of a thickness of the remainder.

Further, the back faces 302 of the belt-shaped elements 3B have seventh cutouts 319 formed therein which avoid interference of the second coupling elements 315 and the second middle element 316 in the folded state, as shown in Fig.22. These seventh cutouts 319 are provided at portions of the second coupling elements 315 and the second middle element 316 which overlap with each other in the folded state. With the seventh cutouts 319, the pair of second coupling elements 315 and the second middle element 316 have a thickness in portions overlapping with each other which is reduced to half of a thickness of the remainder.

According to the third embodiment as described above, the first middle element 313 includes a pair of second opposite end elements 314, a pair of second coupling elements 315 and a second middle element 316, wherein the pair of second opposite end elements 314 form opposite ends of the first middle element 313 in the longitudinal direction, each of the pair of second coupling elements 315 is coupled to one of the pair of second opposite end elements 314, and the second middle element 316 is coupled between the pair of second coupling elements 315, wherein the second opposite end elements 314 and the second coupling elements 315 are coupled to each other via the fourth bent portions 8 intersecting the longitudinal direction at an angle of 45 degrees, and wherein the second coupling elements 315 and the second middle element 316 are coupled to each other via the fifth bent portions 9 extending in parallel to the fourth bent portions 8. This enables the belt-shaped elements 3B to be folded so as to further reduce the longitudinal dimension.

### (Exemplar Variations of the First to Third Embodiments)

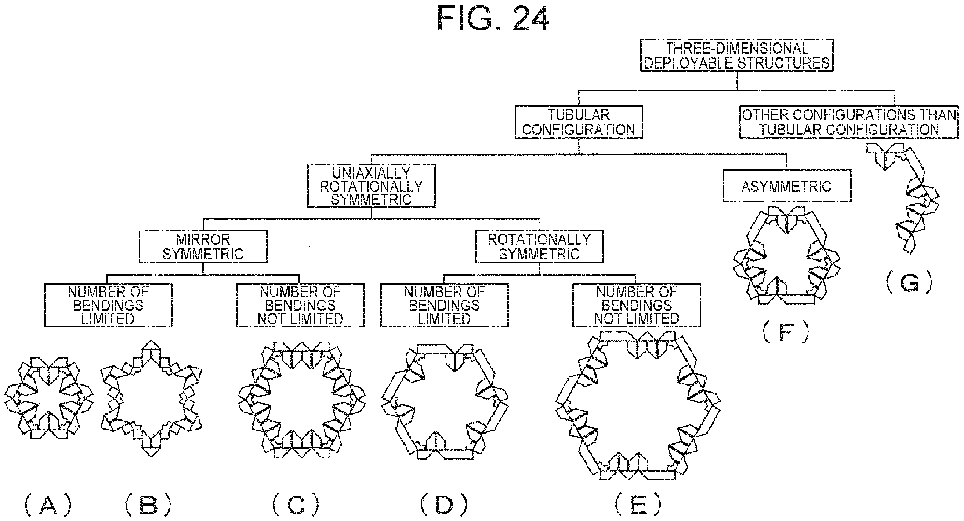

Next, exemplary variations of the first to third embodiments will be described with reference to Fig.24. Fig.24 shows top views of variations of the deployable structures according to the present invention. Fig.24(A) shows a deployable structure 1B which has a regular hexagonal tubular shape in the deployed state, similarly to the second embodiment. Fig.24(C) shows a deployable structure which is constituted by the belt-shaped elements 3B according to the third embodiment and has a regular hexagonal tubular shape in the deployed state. Although the belt-shaped elements 3A, 3B according to the first to third embodiments as described above are configured to be folded inwardly in the tube in a U-shape, they are not limited thereto. As shown in Fig.24(B), the belt-shaped elements 3A, 3B may be configured to be folded outwardly of the tube in a U-shape.

Further, according to the first to third embodiments, the belt-shaped elements 3A, 3B are configured to be mirror symmetric also in the folded state. However, they are not limited thereto. As shown in Figs.24(D) and (E), it is not necessary that the belt-shaped elements are not mirror symmetric, but the deployable structure may be rotationally symmetric in the folded state.

Furthermore, the deployable structure according to first to third embodiments are configured in a uniaxially rotationally symmetric tubular shape. However, they are not limited thereto. The deployable structure may be configured in an asymmetric tubular shape as shown in Fig.24(F), or may not be configured in a tubular shape as shown in Fig.24(G).

### (Fourth Embodiment)

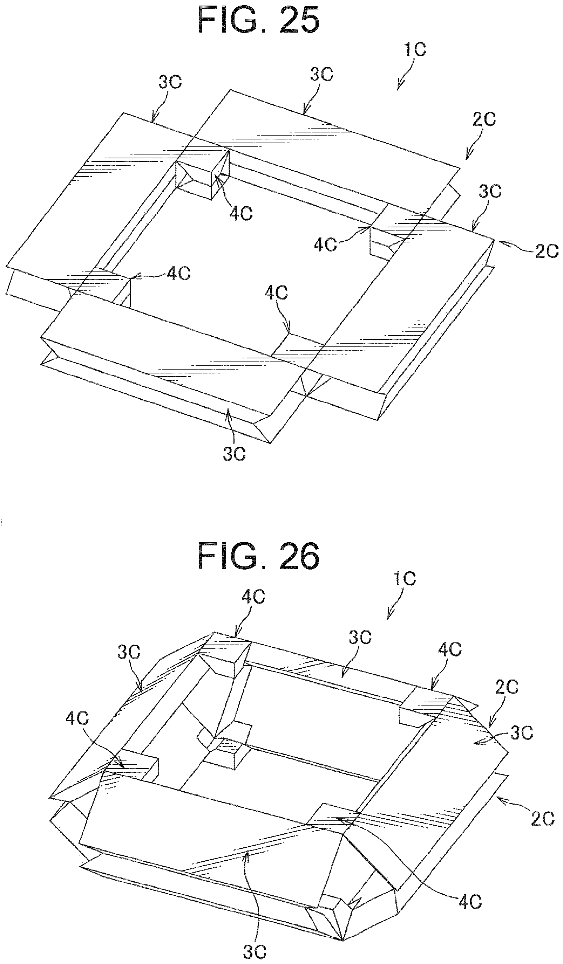

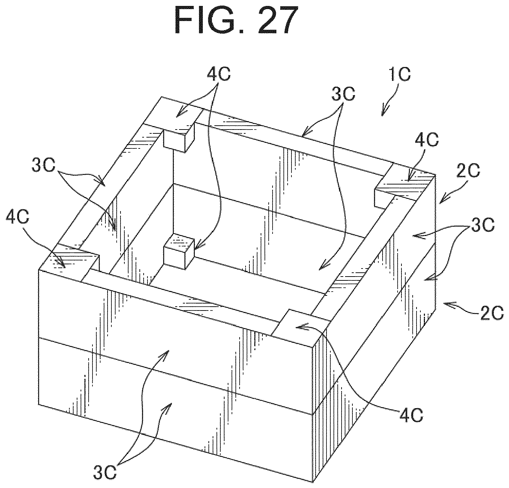

Next, a fourth embodiment will be described with reference to Figs.25 to 27. As shown in this Figure, a deployable structure 1C according to the fourth embodiment is a structure which is freely deformable between a deployed state in a quadrilateral tubular shape (Fig.27) and a folded state (Fig.25), wherein in the folded state, the structure is folded so as to be reduced in its tube height in comparison with the deployed state. The deployable structure 1C includes a plurality of tubular units 2C connected in a tube height direction. According to the present embodiment, the deployable structure 1C includes two tubular units 2C.

Each of the tubular units 2C includes four belt-shaped elements 3C and four connecting elements 4C, wherein each of the belt-shaped elements 3C forms one face of the quadrilateral tube and the connecting elements 4C connect the four belt-shaped elements 3C to each other. A large difference between the first to third embodiments and the fourth embodiment is a configuration of the belt-shaped elements 3C. According to the first to third embodiments, the belt-shaped elements 3A, 3B are foldable so as to reduce the longitudinal dimension. In contrary, the belt-shaped elements 3C are configured in a single-plate shape with a rectangular front face which cannot be folded to reduce a longitudinal dimension.

Further, the fourth embodiment differs from the first embodiment also in a configuration of the connecting elements 4C. While the connecting elements 4A according to the first embodiment have the fourth cutouts 406, the fourth embodiment do not have a fourth cutout 406. As clear from this, the fourth cutouts 406 are not necessary, and may be omitted.

Although according to the first to fourth embodiments as described above, the connecting elements 4A to 4C have the first cutouts 405 in the lateral face 402, it is to be noted that they are not limited thereto. The first cutouts 405 are not necessary as far as the connecting elements are configured in a thin-plate shape.

Further, the deployable structure 1A to 1C according to the first to fourth embodiments as described above are configured in a tubular shape. However, they are not limited thereto. The deployable structure may not be configured in a tubular shape.

Furthermore, the deployable structure 1A to 1C according to the first to fourth embodiments as described above is freely deformable from the folded state to the deployed state with the corners 307 of the pair of the belt-shaped elements 3A to 3C being in contact with each other. However, it is not limited thereto. It is only necessary that the corners 307 are close to each other, and they may not be in contact with each other.

Further, according to the first to fourth embodiments as described above, the pair of belt-shaped elements 3A to 3C are connected to the connecting elements 4A to 4C via the first bent portions 5 which are bendable convexly on the front face 301 along the longitudinal direction, wherein during a process from the folded state to the deployed state, the connecting elements 4A to 4C may maintain relative positions of a pair of first bent portions 5 unmoved, the pair of first bent portions connecting the pair of belt-shaped elements 3A to 3C to the connecting elements 4A to 4C. However, they not limited thereto. The connecting elements 4A to 4C may be configured in any manner in which they connect the pair of belt-shaped elements 3A to 3C to each other so that they are freely deformable between a folded state and a deployed state with the pair of belt-shaped elements 3A to 3C being close to each other at their corners 307 in one side in the thickness direction on the front face 301, wherein the pair of belt-shaped elements 3A to 3C extend in parallel to the predetermined plane xy in the folded state and perpendicular to the predetermined plane xy in the deployed state. Thus, the connecting elements may be formed e.g. by universal joints which connect the pair of belt-shaped elements 3A to 3C at their corners 307 to each other.

It is to be noted that the present invention is not limited to the above-described embodiments. This means that various modifications are possible within a scope which does not depart from the core and the spirit of the present invention.

### Reference Signs List

- 1A- 1C: Deployable structure
- 2A - 2C: Tubular unit (unit)
- 3A, 3B: Belt-shaped elements
- 4A - 4C: Connecting element
- 5: First bent portions
- 6: Second bent portions
- 7: Third bent portions
- 8: Fourth bent portions
- 9: Fifth bent portions
- 301: Front face
- 307: Corner
- 308: Second cutouts
- 309: First cutouts
- 311: First opposite end elements
- 312: First coupling elements
- 313: First middle element
- 314: Second opposite end elements
- 315: Second coupling elements
- 316: Second middle element
- 405: First cutouts
- xy: Predetermined plane

## Claims

1. A deployable structure comprising:
a pair of belt-shaped elements; and
a connecting element,
wherein each of the pair of belt-shaped elements extending along a longitudinal direction, and
wherein the connecting element connects the pair of belt-shaped elements so as to be freely deformable between a folded state and a deployed state, with corners of the pair of belt-shaped elements being close to each other on their front faces on one side in a thickness direction of the pair of belt-shaped elements, wherein the pair of belt-shaped elements extends in parallel to a predetermined plane in the folded state and perpendicular to the predetermined plane in the deployed state.

2. The deployable structure according to claim 1,
wherein ends of the pair of belt-shaped elements are connected to the connecting element via first bent portions which are bendable convexly on the front face along the longitudinal direction, and
wherein during a process from the folded state to the deployed state, the connecting element maintains relative positions of a pair of first bent portions unmoved, each of the pair of first bent portions connecting one of the pair of belt-shaped elements to the connecting element.

3. The deployable structure according to claim 2,
wherein the pair of first bent portions intersect each other in a predetermined angle, and
wherein the predetermined angle is equal to an intersection angle of the pair of belt-shaped elements in the deployed state.

4. The deployable structure according to any one of claims 1 to 3,
wherein at least one of lateral faces of the pair of belt-shaped elements and the connecting element which approach each other in the deployed state has a first cutout which is configured to avoid an interference between the pair of belt-shaped elements and the connecting element in the deployed state.

5. The deployable structure according to any one of claims 1 to 4,
wherein lateral faces of the pair of belt-shaped elements which approach each other in the deployed state have second cutouts which are configured to avoid an interference between the pair of belt-shaped elements in the deployed state.

6. The deployable structure according to any one of claims 1 to 5,
wherein each belt-shaped element of the pair of belt-shaped elements includes a pair of first opposite end elements, a pair of first coupling elements and a first middle element, wherein the pair of first opposite end elements form opposite ends of the belt-shaped element in the longitudinal direction, each of the pair of first coupling elements is coupled to one of the pair of first opposite end elements, and the first middle element is coupled between the pair of first coupling elements,
wherein the first opposite end elements and the first coupling elements are coupled to each other via second bent portions, the second bent portions intersecting the longitudinal direction, and
wherein the first coupling elements and the first middle element are coupled via third bent portions, the third bent portions intersecting the longitudinal direction.

7. The deployable structure according to claim 6,
wherein one of the second bent portions and third bent portions are configured to be bent convexly on the front face, while another of the second bent portions and third bent portions may be bent concavely on the front face.

8. The deployable structure according to claim 6 or 7,
wherein the first middle element includes a pair of second opposite end elements, a pair of second coupling elements and a second middle element, wherein the pair of second opposite end elements form opposite ends of the first middle element in the longitudinal direction, each of the pair of second coupling elements is coupled to one of the pair of second opposite end elements, and the second middle element is coupled between the pair of second coupling elements,
wherein the second opposite end elements and the second coupling elements are coupled to each other via fourth bent portions, the fourth bent portions intersecting the longitudinal direction, and
wherein the second coupling elements and the second middle element are coupled via fifth bent portions, the fifth bent portions intersecting the longitudinal direction.

9. The deployable structure according to any one of claims 1 to 8, further comprising a plurality of units each including the pair of belt-shaped elements,
wherein the units are connected to each other so as to be freely bendable at ends in a belt width direction.

10. The deployable structure according to any one of claims 1 to 9,
wherein the deployable structure has a tubular shape in the deployed state.
